# EUROPEAN PATENT APPLICATION

(11) **EP 4 733 722 A1**
(43) Date of publication of application: **29.04.2026**
(21) Application number: 25205567.8
(22) Date of filing: 30.09.2025
(51) Int. Cl.: G01G 19/44

(54) **NEONATAL CARE SYSTEM WITH INTEGRATED WEIGHING**

(30) Priority: 25.10.2024 US 202418926612
(71) Applicant: GE Precision Healthcare LLC, Waukesha, WI 53188 (US)
(72) Inventor: QUADROS, Vernon, Waukesha, 53188 (US); KAVOORI SETHUMADHAVAN, Nagapriya, Waukesha, 53188 (US); NAIK, Rajendra, Waukesha, 53188 (US)
(74) Representative: Kilburn & Strode LLP

(57) **Abstract**

A neonatal care system includes a scale having multiple load cells for measuring weight, multiple weight elements having predetermined weights, multiple actuators, a processing device, and a memory storage device. Each of load cells supports one or more of the predetermined weights. The actuators are configured to raise a platform supporting an infant off of the scale, and lower the platform onto the scale. The memory storage device includes instructions executable by the processing device to direct the actuators to raise the platform off of the scale, determine measured weights from the load cells, and determine a drift of each of the load cells by determining a difference between each of the predetermined weights and each of the measured weights.

## Description

### BACKGROUND

The present disclosure generally relates to neonatal care systems and methods, and more particularly to systems and methods for a neonatal care system with integrated weighing.

Neonates, particularly premature infants, are often placed within an incubator so that they may have a controlled and monitored environment to aid in their survival and growth. Accordingly, it is useful to monitor the infant's weight while the infant is maintained in the incubator. It is additionally useful to monitor the infant's weight because medical therapies, such as the dosing of pharmeceuticals, are based upon the accurate determination of the infant's weight. Accordingly, neonatal care systems (i.e., neonatal care systems) such as incubators, warmers, and other neonatal care systems may include integrated weighing systems having one or more load cells configured to determine a weight of an infant on a platform of the neonatal care system.

### SUMMARY

This Summary is provided to introduce a selection of concepts that are further described below in the Detailed Description. This Summary is not intended to identify key or essential features of the claimed subject matter, nor is it intended to be used as an aid in limiting the scope of the claimed subject matter.

A neonatal care system includes a scale having multiple load cells for measuring weight, multiple weight elements having predetermined weights, multiple actuators, a processing device, and a memory storage device. Each of load cells supports one or more of the predetermined weights. The actuators are configured to raise a platform supporting an infant off of the scale, and lower the platform onto the scale. The memory storage device includes instructions executable by the processing device to direct the actuators to raise the platform off of the scale, determine measured weights from the load cells, and determine a drift of each of the load cells by determining a difference between each of the predetermined weights and each of the measured weights.

In one embodiment, the instructions are executable to determine that the drift exceeds a predetermined drift threshold, and provide a first notification comprising a request to calibrate a load cell corresponding to the drift.

In one embodiment, the instructions are executable by the processing device to determine that the load cells are scheduled for a calibration, determine that the drift does not exceed a predetermined drift threshold, and provide a second notification comprising a suggestion to delay the calibration.

In one embodiment, the instructions are executable by the processing device to direct the actuators to lower the platform supporting the infant onto the scale, determine a second plurality of measured weights based on a plurality of additional signals from the plurality of load cells, and determine a weight of the infant based on the second plurality of measured weights, the predetermined weight, and the drift.

In one embodiment, the instructions are executable by the processing device to determine the weight of the infant at predetermined periodic intervals.

In one embodiment, the instructions are executable by the processing device to determine that a difference between a first interval weight of the infant determined at a first interval and a second interval weight of the infant determined at a second interval exceeds a predetermined threshold, and determine whether the difference is representative of a weight change of the infant.

In one embodiment, the difference is determined not representative by capturing an image of the platform supporting the infant, and identifying an object in the image that is representative of the difference.

In one embodiment, the difference is determined not representative by capturing an image of the platform supporting the infant, and identifying a missing object from the image that is representative of the difference.

In one embodiment, the difference is determined not representative by providing a notification for a caregiver using a user interface, wherein the notification indicates the difference, receiving an indication from the user interface that the difference is not a result of an object placement or removal, and providing a notification via the user interface to perform a full weighing cycle, or re-calibrate the scale.

In one embodiment, the difference is determined representative by providing a notification for a caregiver using a user interface, wherein the notification indicates the difference, and receiving an indication from the user interface that the difference is a result of an object placement or removal.

A neonatal care system for non-disruptive load cell drift measurement includes a scale comprising at least one load cell for measuring weight, at least one weight element having a predetermined weight a plurality of actuators configured to evenly distribute a weight of the predetermined weight on the scale, a processing device, and, a memory storage device comprising instructions. The instructions are executable by the processing device to direct the actuators to evenly distribute the weight of the predetermined weight on the scale, determine a first measured weight based on one or more signals from the at least one load cell, and determine a drift of the at least one load cell by subtracting the predetermined weight from the first measured weight.

In one embodiment, the instructions are executable by the processing device to determine that the drift exceeds a predetermined drift threshold, and provide a first notification comprising a request to calibrate the at least one load cell.

In one embodiment, the instructions are executable by the processing device to direct the actuators to remove the weight of the predetermined weight from the scale, determine a second measured weight based on one or more additional signals from the at least one load cell, and determine a weight of an infant based on the second measured weight and the drift.

In one embodiment, the instructions are executable by the processing device to determine the weight of the infant at predetermined periodic intervals, determine that a difference between a first interval weight of the infant determined at a first interval and a second interval weight of the infant determined at a second interval exceeds a predetermined threshold, and determine whether the difference is representative of a weight change of the infant.

In one embodiment, the difference is determined not representative by capturing an image of a platform supporting the infant, and identifying an object in the image that is representative of the difference.

In one embodiment, the difference is determined not representative by capturing an image of the platform supporting the infant, and identifying a missing object from the image that is representative of the difference.

A method of non-disruptive load cell drift measurement includes directing a plurality of actuators of a scale to raise a platform supporting an infant off of the scale. Additionally, the method includes determining a first measured weight based on one or more signals from at least one load cell of the scale. The at least one load cell supports all weight of a weight element having a predetermined weight. Further, the method includes determining a drift of the at least one load cell by subtracting the predetermined weight from the first measured weight.

In one embodiment, the method includes determining that the drift exceeds a predetermined drift threshold, and providing a first notification comprising a request to calibrate the at least one load cell.

In one embodiment, the method includes directing the actuators to lower the platform supporting the infant onto the scale. Additionally, the method includes determining a second measured weight based on one or more additional signals from the at least one load cell. Further, the method includes determining a weight of the infant based on the second measured weight, the predetermined weight, and the drift.

In one embodiment, the method includes determining the weight of the infant at predetermined periodic intervals. Additionally, the method includes determining that a difference between a first interval weight of the infant determined at a first interval and a second interval weight of the infant determined at a second interval exceeds a predetermined threshold. Further, the method includes determining whether the difference is representative of a weight change of the infant.

Various other features, objects, and advantages of the invention will be made apparent from the following description taken together with the drawings.

### BRIEF DESCRIPTION OF THE DRAWINGS

The present disclosure is described with reference to the following Figures.
Fig. 1 is a perspective view of an exemplary neonatal care system with integrated weighing according to one embodiment of the present disclosure.
Fig. 2 is a perspective view of an exemplary neonatal care system with integrated weighing according to one embodiment of the present disclosure.
Fig. 3A is a side view of a patient, bed, and support plate, positioned on an exemplary weight scale according to one embodiment of the present disclosure.
Fig. 3B is a top view of an exemplary weight scale according to one embodiment of the present disclosure.
Fig. 4 is a graph illustrating changes in measured weight over time of a neonate in a neonatal care system with integrated weighing according to one embodiment of the present disclosure.
Fig. 5A is a side view of a patient, bed, and support plate, positioned on an exemplary weight scale according to one embodiment of the present disclosure.
Fig. 5B is a top view of an exemplary weight scale according to one embodiment of the present disclosure.
Fig. 5C is a top view of an exemplary weight scale according to one embodiment of the present disclosure.
Fig. 6 is a flow diagram depicting an exemplary process for weight measurement in a neonatal care system with integrated weighing according to one embodiment of the present disclosure.
Fig. 7 is a process flow chart of a method for determining drift correction in a neonatal care system with integrated weighing according to one embodiment of the present disclosure.
Fig. 8 is a process flow chart of a method for determining drift correction in a neonatal care system with integrated weighing according to one embodiment of the present disclosure.
Fig. 9 is a process flow chart of a method for weight measurement in a neonatal care system with integrated weighing according to one embodiment of the present disclosure.
Fig. 10 is a diagram of a system for weight measurement in a neonatal care system with integrated weighing according to one embodiment of the present disclosure.
Fig. 11 is an exemplary scale manager for a neonatal care system with integrated weighing according to one embodiment of the present disclosure.

### DETAILED DESCRIPTION

In the present description, certain terms have been used for brevity, clarity and understanding. No unnecessary limitations are to be inferred therefrom beyond the requirement of the prior art because such terms are used for descriptive purposes only and are intended to be broadly construed.

As used herein, unless otherwise limited or defined, discussion of particular directions is provided by example only, with regard to particular embodiments or relevant illustrations. For example, discussion of "top," "bottom," "front," "rear," "left," "right," "horizontal," "vertical," and "longitudinal" features and/or relative motion, e.g., movement "up" and "down," is generally intended as a description only of the orientation of such features relative to a reference frame of a particular example or illustration. Correspondingly, for example, a "top" feature may sometimes be disposed below a "bottom" feature (and so on), in some arrangements or embodiments. Additionally, or alternatively, embodiments may be arranged in a different orientation such that "top" and "bottom" features are arranged horizontally relative to each other, for example in a "left-to-right" orientation.

The use herein of the terms "including," "comprising," or "having," and variations thereof, is meant to encompass the elements listed thereafter and equivalents thereof, as well as additional elements. Embodiments recited as "including," "comprising," or "having" certain elements are also contemplated as "consisting essentially of" and "consisting of" those certain elements.

The inventors have recognized a problem with current neonatal care systems, such as incubators, infant warmers, and other types of neonatal care systems and devices. As stated previously, neonates in such systems generally have their weight measured once a day to monitor growth, and to determine the appropriate medication dosage, intravenous (IV) fluid intake, and the like. In such systems, the scale for measuring weight is located beneath the mattress on which the patient is lying. However, the scale typically includes load cells, which are devices used to determine weight, and load cells may drift over time. Drifting refers to the diminishing accuracy of load cells. In other words, the accuracy may "drift" towards heavier or lighter measurements than the actual weight of the patient and/or objects being weighed. This scale drift may be accounted for by tareing, which is done everytime a weight measurement is taken, and/or through calibration, performed periodically, e.g., once a year. Thus, determining a more accurate measurement on a scale with drifting, may involve determining a baseline measurement before placing the patient to be measured on the scale. In this way, it may be possible to isolate the weight of the patient from the load cell drift, and the weight of other items on the scale, such as the mattress. Accordingly, a caretaker may lift the patient (neonate) with any equipment (e.g., a breathing tube) still attached, and try to maintain the patient's arms, legs, blankets, and clothing off of the mattress, which remains on the scale. In this way, the caretaker or a scale operator may baseline the weight on the scale. Subsequently, the caretaker may place the patient back onto the mattress while holding up any equipment attached to the patient. Accordingly, it may be possible to determine the patient's weight by determining the difference between the baseline measurement and the measurement with the patient on the mattress.

This procedure may be performed repeatedly, where a re-measure button on the scale can be pressed to remeasure the patient weight. However, this is a somewhat cumbersome process and has several challenges. More specifically, lifting the neonate can: interfere with neurodevelopment as the lifting is a negative stimulus to the neonate; interfere with the neonate's sleep; cause discomfort to the neonate; and dislodge tubes and sensors, which may be hazardous for the neonate.

In view of the foregoing problems and challenges recognized by the inventors through their extensive research and experience in the field of neonatal care systems, the inventors have developed the disclosed improved systems and methods for weighing an infant housed in a neonatal incubator, warmer, or other neonatal care system. The disclosed systems and methods may more accurately weigh an infant regardless of the drift of load cells, and without lifting the neonate off of the mattress. Further, these systems and methods may be useful for determining when to calibrate load cells as they undergo drift.

Additionally, systems and methods disclosed herein provide infant weighing mechanisms that determine drift by measuring a weight element having a predetermined weight. Thus, by determining the difference between the measurement of the weight element and the predetermined weight amount, it is possible to determine the drift of the load cell used for the measurement. Further, knowing the drift makes it possible to determine a more accurate weight measurement of a neonate using the same load cells. More specifically, determining the more accurate weight measurement can involve modifying the neonate's measured weight by the amount of drift determined. Thus, if the determined drift is positive 0.2 kg, determining the neonate's weight involves subtracting 0.2 kg from the measured neonate weight. Conversely, if the determined drift is negative 0.2 kg, determining the neonate's weight involves adding 0.2 kg to the measured weight. In one embodiment of the present disclosure, weighing the weight element can involve adding the weight element to the load cell without moving the neonate. Another embodiment of the present disclosure may involve using actuators to slowly move the neonate and mattress off of the load cells, which may have the weight elements position thereon. Alternatively, the actuators may slowly lower the load cells such that the bed 24 and patient's weight do not fall on the load cells while the neonate remains on the mattress. In these ways, embodiments of the present disclosure can provide a more accurate neonate weight measurement without interfering with the neonate's neurodevelopment and sleep, and without creating a potential hazard to the neonate. Further, by determining load cell drift in this way, it may be possible to more accurately predict when to re-calibrate load cells.

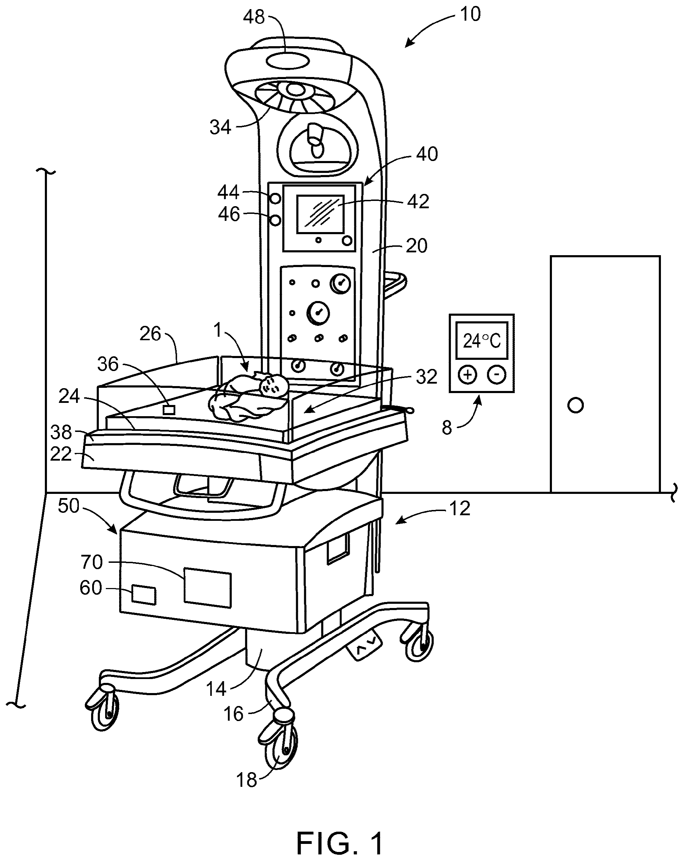

Fig. 1 is a perspective view of an exemplary neonatal care system 10 with integrated weighing according to one embodiment of the present disclosure. The neonatal care system 10 is shown within a room, such as a labor and delivery suite, or a neonatal intensive care unit, within a medical facility. The ambient air temperature within the room is controlled by room thermostat 8, which is adjustable up and down according to the specification of the patient and medical personnel in a customary manner.

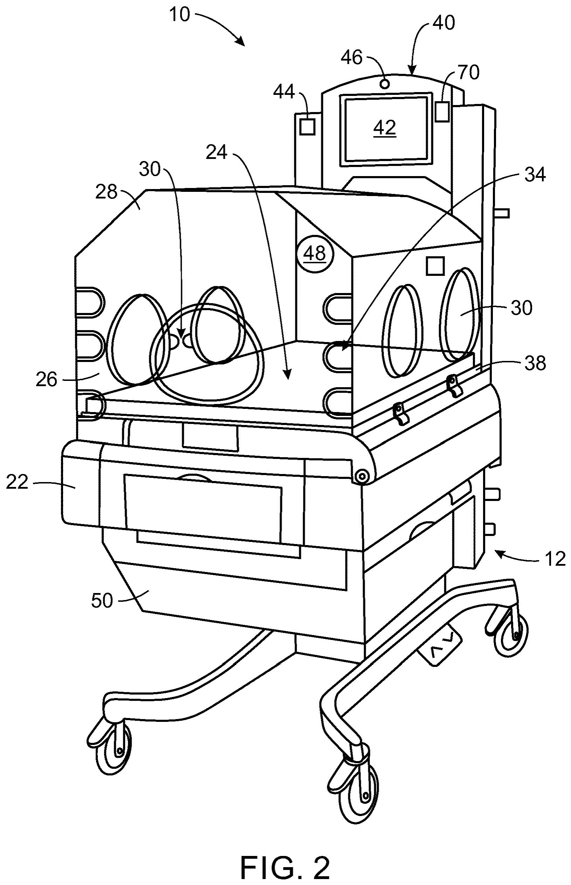

The neonatal care system 10 shown here is an infant warmer having some elements similar to the Giraffe^{®} warmer produced by GE Healthcare^{™}. The neonatal care system 10 includes a stand 12 supported by legs 14 and feet 16 provided with wheels 18 in a manner presently known in the art. The walls 26, and in the case of an incubator, a cover 28 (See Fig. 2), generally surround and cover the bed 24 (e.g., mattress), to prevent the patient 1 from falling from the bed 24 and also to maintain a controlled environment within the interior. The air within the interior defined by the walls 26 (and when present, the cover 28) is also referred to as inside air 32. The heater 34, e.g., radiative heater, may be a heat generating device such as those used within the exemplary warmers described above. The patient 1 is warmed using the heater 34. Additionally, the stand 12 also supports an enclosure 50, and contains a controller 70 (e.g., a microprocessor, computer processing circuit, and the like) for operating the neonatal care system 10 in a manner presently known in the art.

A column 20 extends upwardly from the stand 12. The platform 22 may be supported by the base on the stand 12, and may be height adjustable along the column 20 in a manner presently known in the art. Further, the platform 22 is configured to support a scale 38, upon which is positioned below the bed 24, which is configured to support the patient 1. Similar to the enclosure 50, the scale 38 may include a controller (not shown). The controller of the scale 38 could be a separate processor from the controller 70, or could be incorporated into the controller 70. Additionally, the controller of the scale (and/or the controller 70) may include a scale manager, or a portion thereof, for performing integrated weighing as described herein. The scale 38 can be any conventional weighing device that is capable of determining the weight of anything and/or anyone placed thereon. In one embodiment, the scale 38 includes one or more load cells (not shown) configured to provide a signal that is indicative of the weight on the scale 38. Although the term, load cell, is used in the disclosure, it should be understood that the scale 38 may incorporate any sensor(s) or device(s) that generates a signal that can be measured, and is representative of weight or force on the scale 38.

The scale manager may periodically use the scale 38 to take a weight measurement of the patient 1 without lifting the patient 1 from the bed 24. In such scenarios, the scale manager may determine the patient weight by subtracting the weight of the bed 24 from the weight measurement. Additionally, the scale manager may take a weight measurement of one or more weight elements (not shown) that are placed on the load cells. In this way, the scale manager may determine a drift of the load cells of the scale 38. Determining this drift may make it possible for the scale manager to more accurately determine the patient weight. The scale manager may determine a more accurate measurement by modifying the patient weight measured by the scale 38 based on the determined drift.

Additionally, according to one embodiment of the present disclosure, the scale manager may determine the timing of maintenance of the load cells. Typically, the load cells may be calibrated based on a predetermined schedule. For example, the load cells may be scheduled to be calibrated every six months. However, it is possible that more (or less) frequent calibration may be useful to maintain more accurate weight measurements. Thus, according to one embodiment of the present disclosure, the scale manager may compare the drift to a predetermined threshold for drift. If the drift exceeds the predetermined threshold, the scale manager may generate a notification to perform maintenance (i.e., calibration) on the load cells. Further, if the load cells are due for calibration according to the schedule, but the drift does not exceed the predetermined threshold, the scale manager may generate a notification that the scheduled maintenance can be skipped.

As stated previously, the scale manager may take periodic weight measurements. In this way, the scale manager may generate a data feed of weight measurements. These periods can be one or more times a second, several seconds, one or more minutes, one or more hours, and the like. As such, it is possible that a caretaker, or other person, may place objects on (or remove objects from) the patient 1 and/or bed 24, which may cause a change in the measured weight. However, in order to determine the weight measurement more accurately, it may be useful to compensate for such changes in weight measurement. Accordingly, in one embodiment of the present disclosure, the neonatal care system 10 may include an image sensor 48. The image sensor 48 may capture individual images, and/or video, of the patient 1 and bed 24. Further, the scale manager may analyze these images to determine whether items are being added to, or removed from, the patient 1 and/or bed. For example, the scale manager may use a machine learning model to perform object detection, whereby the scale manager may identify specific objects added to the patient 1 and/or bed. More specifically, such objects may include a blanket, diaper, clothing, medical equipment, and the like. Additionally, the scale manager may determine, based on the identified object and a predetermined mapping, the weight of the identified object. The predetermined mapping may identify a weight of a number of objects that may be placed on the patient 1 and bed 24. Accordingly, the scale manager may track the cumulative weight of objects placed on the patient 1 and bed 24. Thus, the scale manager may subtract the tracked weight from the weight measurement of the patient 1. Conversely, if the identified object is being removed from the patient 1 or bed 24, the scale manager 38 may subtract the weight of the removed object from the tracked weight measurement. Alternatively, the scale manager may identify objects added and/or removed from the bed 24 without the image sensor 48. For example, the scale manager may identify changes in measured weight that appear to be outlier with respect to the historical weight change of patients. In some embodiments, the scale manager may use a machine learning model trained to identify outliers in weight changes over smaller time periods, e.g., approximating one second.

The neonatal care system 10 further includes a user interface 40, which may include a display 42 configured to provide warning indications (text, colors, icons, and the like) as well as messages relating to operation of the neonatal care system 10. Additionally, the user interface 40 may include a speaker 44 and one or more lights 46. The speaker 44 and lights 46 may provide further information regarding the operational status of the neonatal care system 10 with integrated weighiing. According to one embodiment of the present disclosure, the scale manager may provide the data feed of measured patient weights for presentation on the display 42. For example, the display 42 may show a graph indicating the change in measured patient weight over time.

Additionally, the speaker 44 and lights 46 may communicate information to a caretaker and/or operator via sounds, spoken text, spoken words, flashing, varying colors, and/or the lights being on or off. In this manner, as is discussed further below, the user interface 40 provides feedback customary of infant care systems 10 presently known in the art, but also additional information, warnings, and/or the like according to the present disclosure. It should be recognized that the user interface 40 may also or alternatively be provided via an external device (e.g., a mobile device such as a tablet or smart phone) in communication with the neonatal care system 10. For example, a smart phone may serve as the display 42, speaker 44, and/or lights 46 (alone or in conjunction with another display 42, speaker 44, and lights 46, on the neonatal care system 10) that communicates with the neonatal care system 10 via Bluetooth^{®} or another wireless protocol known in the art.

Further, according to one embodiment of the present disclosure, the display 42, speaker 44, and lights 46, may provide a warning or other indication that the integrated weighting system 38 has detected a relatively large magnitude change in measured weight. Additionally, the indication may include a prompt for the caretaker or operator to disregard the change. For example, after a caretaker has placed a blanket on the patient 1, the scale manager 38 may perform a weight measurement. Due to the blanket placement, the weight measurement may represent a relatively large magnitude change from the previous weight measurement. Accordingly, the scale manager 38 may provide a notification on the display 42, indicating that the patient's weight measurement has increased by a relatively large magnitude. Additionally, the notification may prompt the caretaker and/or operator to disregard the weight increase. Because the weight increase is a result of the blanket placement, the caretaker may engage the user interface 40 to indicate that the weight increase is ignored. Accordingly, the scale manager 38 may subtract the increase from the measured weight.

Fig. 2 is a perspective view of an exemplary neonatal care system 10 with integrated weighing according to one embodiment of the present disclosure. In this example, the neonatal care system 10 is similar to that of Fig. 1, but as an incubator rather than an infant warmer. Similar to Fig. 1, the neonatal care system 10 of Fig. 2 includes stand 12, platform 22, bed 24, walls 26, heater 34, scale 38, user interface 40, image sensor 48, enclosure 50, and controller 70. In the incubator, the patient 1 is warmed using warm air flowing in the incubator from the heater 34 and a fan (not shown) located below the bed 24 and platform 22. Additionally, the neonatal care system 10 of Fig. 2 includes a cover 28, whereby the interior of the neonatal care system 10 is defined by the walls 26 and the cover 28. Further, the incubator of Fig. 2 includes portholes 30 within the walls 26 and/or cover 28 to provide access to the interior (e.g., patient 1, bed 24, and/or the platform 22) without opening one or more of the walls 26 and/or the cover 28 in a manner presently known in the art.

The image sensor 48 and controller 70 of Fig. 2 may be similar to the image sensor 48 and controller of Fig. 1. As such, the controller 70 may include a scale manager that may perform integrated weighing (e.g., determining load cell drift and patient weight, generating a feed of patient weight measurement, and the like) as described with respect to Fig. 1.

Accordingly, the scale manager may periodically use the scale 38 to take a weight measurement of the patient 1 without lifting the patient 1 from the bed 24. According to one embodiment of the present disclosure, the scale manager may generate a data feed of the weight measurements, and generate a graph representing the data feed for presentation on the display 42. Additionally, the scale manager may take a weight measurement of a weight element having a predetermined weight, independent of the weight of the patient 1 (and bed 24). In this way, the scale manager may determine a drift of the load cells of the scale 38, which may make it possible to determine a more accurate measurement by modifying the patient weight measured by the scale 38 based on the determined drift. Additionally, according to one embodiment of the present disclosure, the scale manager may determine the timing of maintenance of the load cells of the scale 38 by comparing the drift to a predetermined threshold, and providing notifications to perform calibration on the load cells if the drift exceeds the predetermined threshold. Further, in cases where the load cells are calibrated according to a predetermined maintenance schedule, the scale manager may provide notifications to skip scheduled maintenance if the drift does not exceed the predetermined threshold.

Further, the scale manager may determine when the measured patient weight changes by a predetermined order of magnitude. As stated previously, such changes may indicate that a caretaker or other operator has place an object on (or removed an object from) the patient 1 or bed 24. In the event of such changes, the scale manager may analyze images and/or video captured by the image sensor 48 to identify objects placed on, or removed from, the patient 1 or bed 24. If an object is identified that corresponds to the weight of the change, the scale manager may modify the measured patient weight based on the weight of the identified object. Alternatively, the scale manager may provide a notification of the weight change, and prompt a caretaker, or other operator of the neonatal care system 10, to accept or reject the weight change.

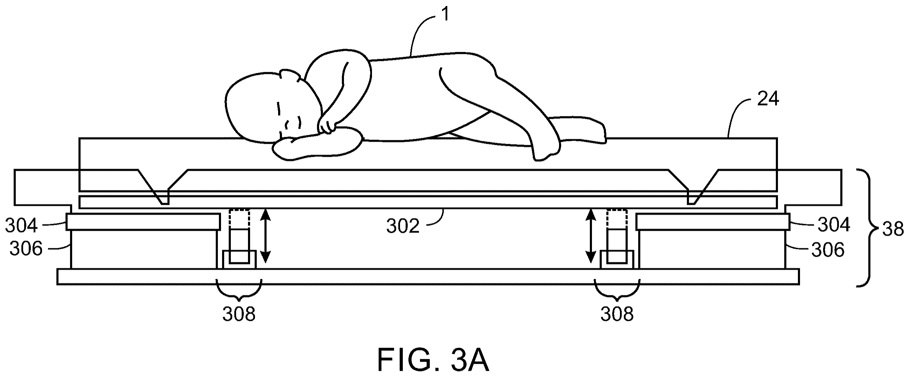

Fig. 3A is a side view of a patient 1, bed 24, and support plate 302, positioned on an exemplary weight scale 38 according to one embodiment of the present disclosure. The weight scale 38 includes weight elements 304, load cells 306, actuators 308, and scale platform. The weight elements 304 (also referred to herein as dead weights) may be objects of a specific predetermined weight that are positioned on each of the load cells 306. The load cells 306 are force transducers. A transducer is an element that converts energy from one form to another. Accordingly, the load cells 306 convert force (e.g., gravity's pull on an object) into an electrical signal that can be measured. Additionally, the load cells 306 measure the electrical signal and generate a numeric representation of the force. In this example, the load cells 306 convert the force of an object's weight on the scale 38 into an electrical signal, measure that signal, and generate a numeric representation of the weight. Additionally, the load cells 306 may provide the measured weight to the scale manager. The scale platform 312 may be a surface element of the weight scale 38, upon which an operator places the items that the weight scale 38 weighs.

Further, the scale manager may measure the patient weight periodically to generate a data feed of the patient's weight. The period of weight measurement may be in seconds, minutes, hours,. In this way, it may be possible to determine the patient's growth over time. However, as stated previously, the accuracy of the load cells 306 may drift over time. As such, it is useful to determine the drift of the load cells 306 to more accurately determine the weight of the patient 1.

The actuators 308 may be mechanical elements of the scale 38 that, in response to a request from the scale manager, extend through the scale 38 to lift the support plate 302, bed 24, and patient 1, off of the scale 38, thus removing the weight of the patient 1, bed 24, and support plate 302 from the load cells 306. In order to mitigate disturbance of the patient 1 by the resultant movement, the actuators 308 may be configured to move at a relatively slow rate. Further, the scale manager may determine the weight of the weight elements 304 by taking a weight measurement while the support plate 302, bed 24, and patient 1 are lifted off of the scale 38. The actuators 308 may subsequently retract to lower the support plate 302 back onto the scale 38.

However, before retracting the actuators 308 and while the support plate 302, bed 24, and patient 1 are still lifted off of the scale 38, the load cells 306 are loaded with the weight elements 304. As such, the scale manager can determine the drift of each of the load cells 306 by determining the difference between the known, predetermined weight of the weight elements 304 and the measured weight from each load cell 306. Additionally, the scale manager can determine the drift of the scale 38 based on the drift of each load cell 306. For example, the scale manager can determine the drift of the scale by summing the drift of the load cells, determining a median total drift over time, an average total drift over time, and the like. Thus, the scale manager can modify further measurements of the patient's weight based on the determined drift of the scale 38. Additionally, to further mitigate disturbance of the patient 1, the scale manager may determine drift at a more relaxed schedule than the weight measurement. For example, the scale manager may determine drift once a day.

According to one embodiment of the present disclosure, the scale manager may identify any sudden changes in weight (e.g., a change above a predetermined magnitude). Such changes may result from the placement of objects on the patient 1 and/or bed. For example, a caretaker may place a blanket, breathing apparatus, or other medical device, on the patient 1. However, the weight of such items does not represent the patient's weight. Accordingly, the scale manager can compensate for such changes algorithmically. For example, the scale manager can use the trend of weight changes over time to determine if an unexpected change in weight has occurred. The scale manager may be configured to identify a change outlier when the weight change trend over time is not smooth. In this way, a sudden increase (or decrease) can be determined simply by subtracting the change in weight measurement from an extrapolated trend. The scale manager may make this determination with or with the image sensor 48. For example, the scale manager may prompt an operator to confirm that the scale manager is to modify the measured weight by the identified outlier, e.g., subtract a sudden increase in weight.

Additionally, to determine which changes to subtract out, the scale manager may use a camera (e.g., image sensor 48) to capture an image of the patient 1 and bed 24. Additionally, the scale manager may use a machine learning model trained to identify objects in such images to identify objects that are place on (or removed from) the patient 1 and/or bed 24. According to one embodiment of the present disclosure, the scale manager may track the weight of such added items in order to perform this compensation at each measurement. Conversely, the scale manager may also identify any sudden reductions in the measured weight. Such reductions may result from the removal of added items like blankets and medical devices. Accordingly, the scale manager may subtract the weight of the removed object from the tracked weight of added items.

In some cases however, the scale manager may not compensate for sudden changes in weight. For example, during a feeding, the patient's weight may increase. Subsequently, changing the patient's diaper may result in a decrease in the patient's measured weight. According to one embodiment of the present disclosure, the scale manager may use the image sensor 48 to determine that the patient is being fed, and thus, not compensate for the resultant increase in the measured weight. Similarly, the scale manager may use the image sensor 48 to determine that the patient's diaper is being changed, and thus not compensate for the resultant decrease in the measured weight. However, in such cases, the scale manager may annotate the data feed to indicate when the feeding and diaper change take place.

Further, according to one embodiment of the present disclosure, the scale manager may use a manual process to determine when, and when not, to compensate for sudden changes in the measured weight. For example, in response to detecting a change in measured weight beyond a predetermined threshold, the scale manager may generate a notification on a display, such as the display device 42, or an external device having a display. Additionally, the scale manager may generate a prompt for an operator, caretaker, or other individual, to determine whether the scale manager is to compensate for the detected change in the measured weight. Additionally, the prompt may request an annotation for the data feed, such as a feeding, diaper change, and the like.

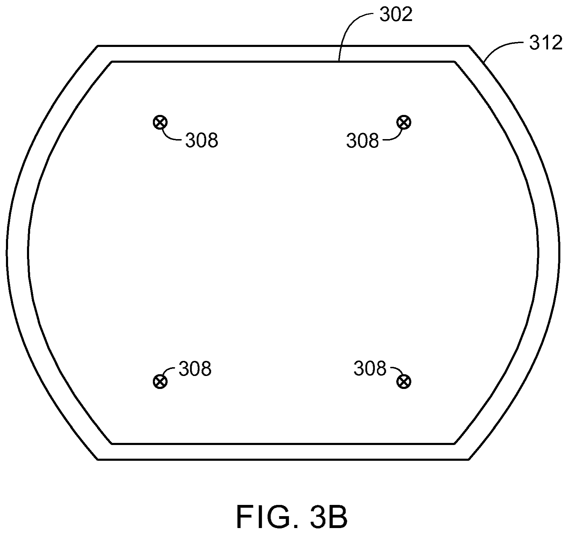

Fig. 3B is a top view of an exemplary weight scale 38 according to one embodiment of the present disclosure. The top view shows the weight scale 38 without the patient 1 and the bed 24. More specifically, the top view shows the support plate 302, the scale platform 312, and the actuators 308. While the actuators 308 are not viewable through the support plate 302 and scale platform 312, in order to provide context, the top view shows where the actuators 308 may be positioned beneath.

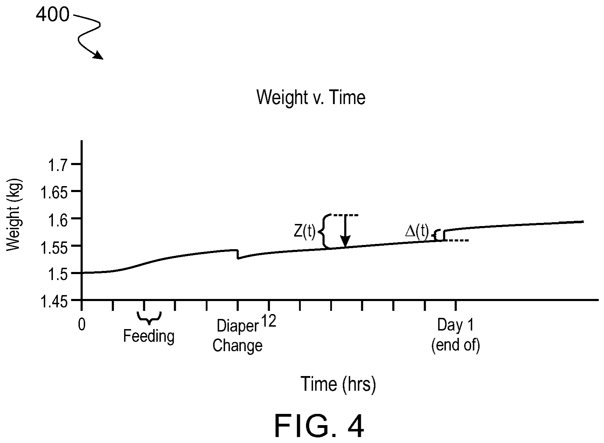

Fig. 4 is a graph 400 illustrating changes in measured weight over time of a neonate in a neonatal care system with integrated weighing according to one embodiment of the present disclosure. In the graph 400, the X-axis represents the time of the weight measurement, with each hash mark representing a progression of two hour increments. Accordingly, time 0 represents the time when the scale manager first determines the patient's weight. Additionally, the Y-axis represents the weight in kilograms (kg) as determined by the scale manager. Further, the graph 400 includes annotations indicating the time of "Feeding," diaper change, a "Blanket" placement and compensation "Z(t)," and a load cell drift adjustment "Δ(t)." As shown, there is no correction applied for the weight measurement changes for the feeding and diaper change. However, for the blanket placement, the Z(t) indicates the amount of compensation applied. Additionally, the compensation for drift, Δ(t), indicates a negative drift. Accordingly, the compensation for the drift is indicated as an addition to the measured weight.

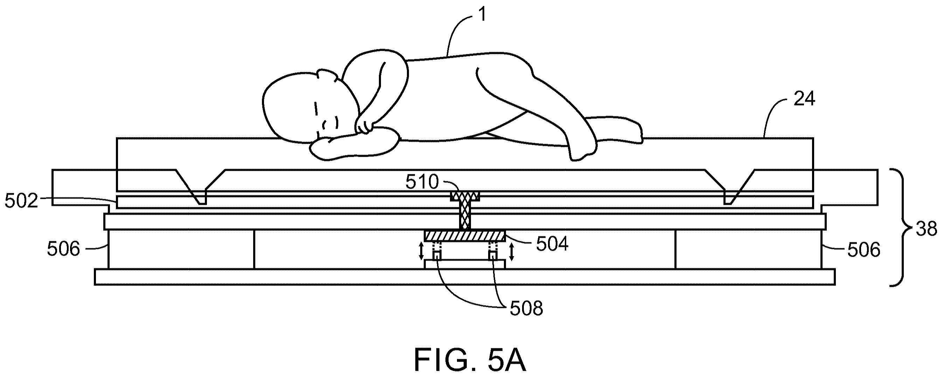

Fig. 5A is a side view of a patient 1, bed 24, and support plate 502, positioned on an exemplary weight scale 38 according to one embodiment of the present disclosure. Fig. 5A is similar to Fig. 3A, and as such may include a support plate 502, weight element 504, load cells 506, actuators 508, and scale platform 512, which are respectively similar to the support plate 302, weight element 304, load cells 306, actuators 308, and scale platform 312, described with respect to Fig. 3A. However, in contrast to the weight measurement and drift determination described with respect to Fig. 3A, Fig. 5A depicts the elements of a weight measurement and drift determination performed without moving the patient 1, bed 24, and support plate 502.

More specifically, in this example, the support plate 502 may rest on the load cells 506. Additionally, the weight element 504 may be attached to, or otherwise connected with, a screw 510 (or other securing element). The shaft of the screw 510 may pass through an opening in the support plate 502. Further, the head of the screw 510 may be larger than the opening in the support plate. As such, when the actuators 508 are retracted (i.e., in the down position), the head of the screw 510 may rest on the support plate 502, and the weight element 504 may hang suspended from the support plate 502, i.e., not in contact with the actuators 508. In this way, the weight of the weight element 504 and screw 510 may be added to the support plate 502, and hence, increase the load on the load cells 506. Conversely, when the actuators 508 are extended (e.g., in the up position), the weight element 504 may rest on the actuators 508. In this way, the actuators 508 may remove the weight of the weight element 504 and screw 510 from the support plate 502, as the actuators 508 may push the head of the screw 510 above the support plate 502. Thus, during weight measurement of the patient 1, the scale manager may extend the actuators 508, pushing the screw head above the support plate, and removing the weight of the weight element 504 and screw 510 from the load cells 506. According to one embodiment of the present disclosure, the screw 510 and weight element 504 may be configured as a single piece. However, as a single piece, the weight element 504 may function as described above. Additionally, to determine drift, the scale manager may retract the actuators 508, leaving the weight element 504 suspended from the support plate 502, and thus adding the weight of the weight element 504 and the screw 510 to the load cells 506. Accordingly, to determine the drift of the load cells 506, the scale manager may determine the difference between the measured weight of the patient 1, bed 24, and support plate 502, and the measured weight with the weight element 504 and screw 510 added to the support plate 502, and hence the load cells 506. If this difference varies from the weight of the weight element 504 and screw 510, the scale manager may determine the drift of the load cells 506 to be equal to this variance. In this way, the scale manager may determine a weight measurement of the patient 1 in a neonatal care system, and the drift of the load cells 506 making that measurement, without moving the patient.

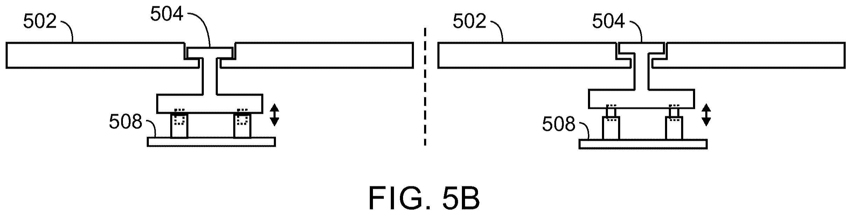

Fig. 5B is two side views 500-1, 500-2 of an exemplary weight scale 38 according to one embodiment of the present disclosure. The side views 500-1, 500-2 show a single piece weight element 504, described above. According to one embodiment of the present disclosure, the side view 500-1 shows the weight element 504 with its weight applied to the support plate 502, and suspended above the actuators 508. Additionally, the side view 500-2 shows the weight element 504 with its weight applied to the actuators 508 and lifted off of the support plate 502.

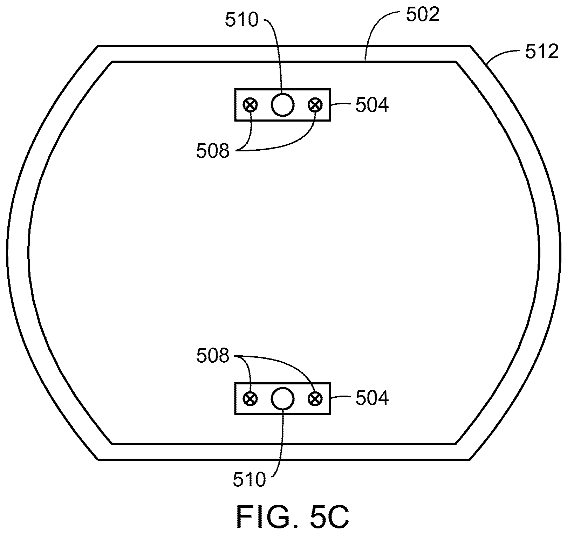

Fig. 5C is a top view of the exemplary weight scale 38 according to one embodiment of the present disclosure. The top view shows the weight scale 38 without the patient 1 and bed 24. More specifically, the top view shows the scale platform 512, the support plate 502, the head of the screw 510, the actuators 508, and weight elements 504. While the actuators 508 and weight elements 504 are not viewable through the support plate 502, in order to provide context, the top view shows where the actuators 508 and weight elements 504 may be positioned beneath the support plate 502.

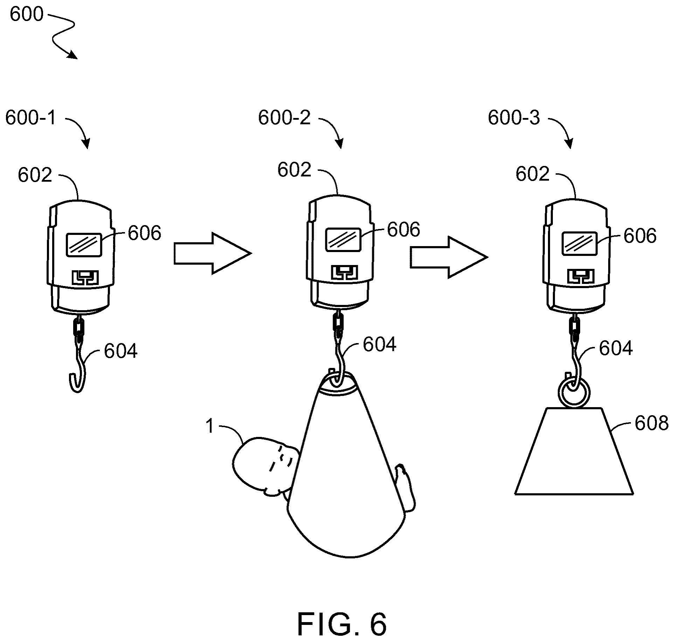

Fig. 6 is a flow diagram depicting an exemplary process 600 for weight measurement in a neonatal care system with integrated weighing according to one embodiment of the present disclosure. In contrast to the neonatal care systems 10 depicted in Figs. 1 and 2, some neonatal care systems may include a hammock-like mattress, or a liftable infant platform. In such embodiments, a scale manager may use a spring-type scale, positioned above the patient 1, instead of below. Accordingly, the process 600 includes operations 600-1, 600-2, 600-3. At operation 600-1, the process 600 depicts the spring scale 602, with a hook 604 and display 606. At operation 600-2, after a caretaker or other operator attaches the liftable platform or hammock to the hook 604, the scale manager may take a weight measurement of the patient 1 and display the weight on the display 606. Further, at operation 600-3, after the caretaker or other operator has disconnected the hammock or platform, and attached a weight element 608 to the hook 604, the scale manager may take a weight measurement of the weight element 608. Additionally, the scale manager may display the measured weight of the weight element 608 on the display 606. Further, the scale manager may determine if the scale 602 has any drift by determining the difference between the weight measurement at operation 600-3 and the known weight of the weight element 608. Further, if the spring scale 602 has drift, the scale manager can modify the measured weight of the patient by the amount of drift.

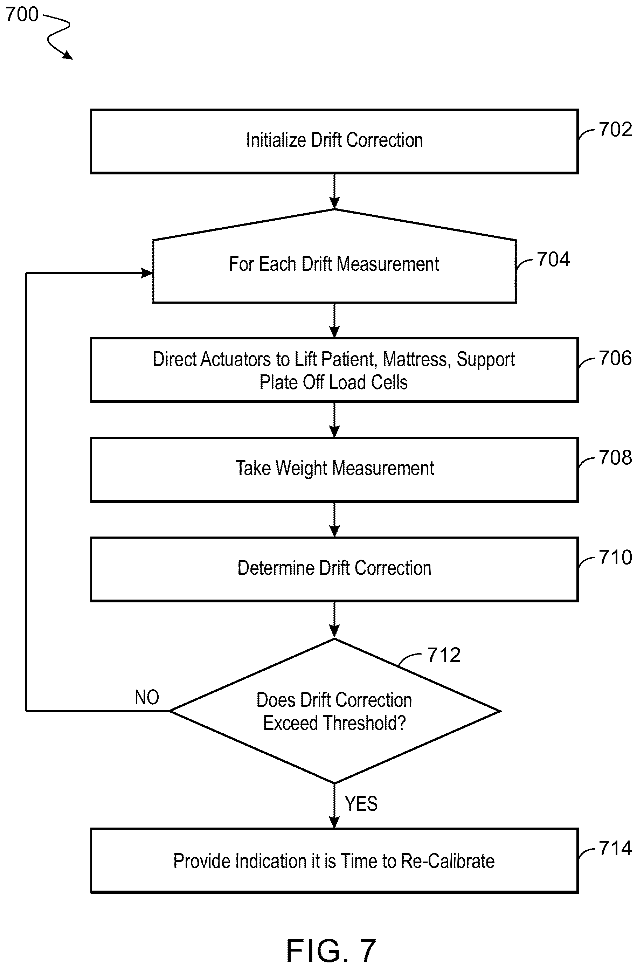

Fig. 7 is a process flow chart of a method 700 for determining drift correction in a neonatal care system with integrated weighing according to one embodiment of the present disclosure. The scale manager may perform the method 700.

At operation 702, the scale manager may initialize the drift correction. As stated previously, the load cells 306 may drift over time, thus making the weight measurements less accurate. However, before determining any drift correction, the scale manager may initialize the drift correction to zero.

The scale manager may perform the operations 704 through 714 for each period of drift determination. According to one embodiment of the present disclosure, the period of drift determination may be daily. However, this period may be greater or smaller in various embodiments of the present disclosure.

At operation 706, the scale manager may direct the actuators 308 to lift the patient 1, mattress 24, and support plate 302 off of the load cells 306. Lifting the patient 1, mattress 24, and support plate 302 accordingly may involve extending the actuators 308. In this way, the actuators 308 may leave only the weight elements 304 on the load cells 306.

At operation 708, the scale manager may take a weight measurement. Taking the weight measurement may involve measuring each signal provided by each of the load cells 306 with only the weight of the weight element 304 on the load cell 306.

At operation 710, the scale manager may determine the drift correction. Each load cell may drift. Accordingly, determining the drift correction may involve determining a difference between the weight measurement of each load cell 306 and the predetermined weight of the weight element 304 on that load cell 306. Further, the drift correction may be represented by multiplying the difference by negative one. Thus, if the difference is +2 grams, indicating the load cells 506 measure the weight 2 grams higher than the actual weight, the drift correction is -2 grams. In this way, the scale manager may determine the drift correction.

At operation 712, the scale manager may determine if the drift correction exceeds a predetermined threshold. The predetermined threshold may represent an amount of drift correction that indicates it is time to re-calibrate the load cells 306. If the drift correction exceeds the predetermined threshold, the control of the method 700 may flow to operation 714. If the drift correction does not exceed the predetermined threshold, the control of the method 700 may flow to operation 704.

At operation 714, the scale manager may provide on indication that it is time to re-calibrate the load cells 306. For example, the scale manager may provide a message on the user interface 40, or on a display of the scale 38.

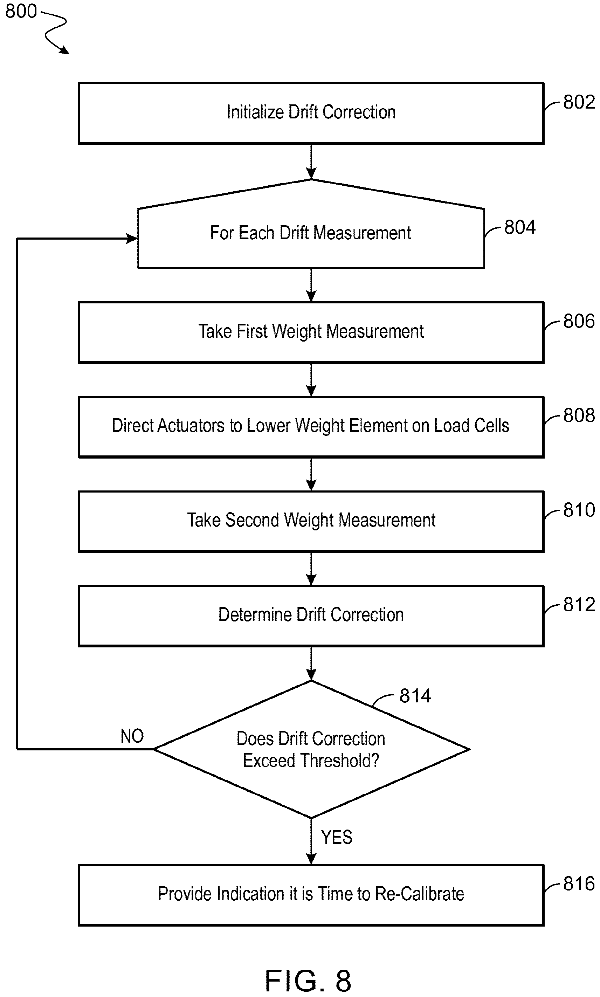

Fig. 8 is a process flow chart of a method 800 for determining drift correction in a neonatal care system with integrated weighing according to one embodiment of the present disclosure. The scale manager may perform the method 800.

At operation 802, the scale manager may initialize the drift correction. As stated previously, the load cells 506 may drift over time, thus making the weight measurements less accurate. However, before determining any drift correction, the scale manager may initialize the drift correction to zero.

Further, the scale manager may perform the operations 804 through 816 for each period of drift determination. As stated previously, the period of drift determination may be daily. However, this period may be greater or smaller in various embodiments of the present disclosure.

At operation 808, the scale manager may direct the actuators 508 to lower the weight elements 504 on the load cells 506. Lowering the wight elements 504 on the load cells 506 may involve lowering the weight elements 504 onto the support plate 502, which is supported by the load cells 506.

At operation 810, the scale manager may take a second weight measurement. Taking the second weight measurement may involve measuring each signal provided by each of the load cells 506 with weight of the weight elements 504 and the screw 510 on the support plate 502, and hence, the load cells 506.

At operation 812, the scale manager may determine the drift correction. Determining the drift correction may involve determining a difference between the measured weight of the weight elements 504 and the screws 510, and the known weights of the weight elements and the screws 510. Determining the measured weight of the weight elements 504 and the screws 510 involves determining the difference between the first weight measurement and the second weight measurement. Accordingly, the drift correction may be represented by multiplying the difference by negative one. Thus, if the difference is -2 grams, indicating the load cells 506 measure the weight 2 grams lower than the actual weight, the drift correction is +2 grams. In this way, the scale manager may determine the drift correction for the load cells 506.

At operation 814, the scale manager may determine if the drift correction exceeds a predetermined threshold. The predetermined threshold may represent an amount of drift correction that indicates it is time to re-calibrate the load cells 506. If the drift correction exceeds the predetermined threshold, the control of the method 800 may flow to operation 814. If the drift correction does not exceed the predetermined threshold, the control of the method 800 may flow to operation 804.

At operation 814, the scale manager may provide an indication that it is time to re-calibrate the load cells 506. For example, the scale manager may provide a message on the user interface 40, or on a display of the scale 38.

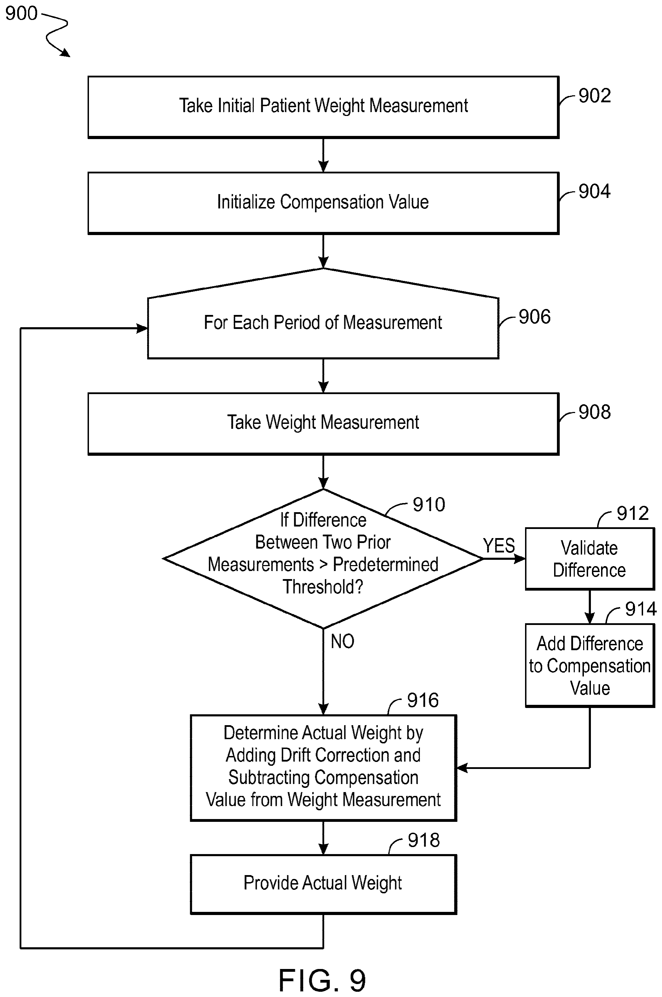

Fig. 9 is a process flow chart of a method 900 for a neonatal care system with integrated weighing according to one embodiment of the present disclosure. The method 900 may be performed by the scale manager described with respect to Figs. 1, 2, 3A, 3B, 4, 5A, 5B, 5C, 6, 7, and 8.

At operation 902, the scale manager may take the initial patient weight measurement. Taking the initial patient weight measurement may involve determining the weight measurement before the patient 1 is placed on the bed 24 of the neonatal care system 10. As such, the scale manager may take the weight measurement of the bed 24, support plate 302, and weight elements 304 (without the patient 1). Additionally, the scale manager may take a weight measurement after the patient 1 is placed on the bed 24. Thus, the scale manager may determine the initial patient weight as the difference between the weight measurement with the patient 1 on the bed, and the weight measurement before placement.

At operation 904, the scale manager may initialize a compensation value. As stated previously, the compensation value may be a weight of the support plate 302, 502, the bed 24, and any items placed on the bed 24 or the patient 1, such as a blanket, clothing, medical devices, and the like. If the patient is initially placed on the bed 24 without such items, the compensation value may be initialized to the weight of the support plate 302, 502 and bed 24. However, if the patient 1 is placed on the bed 24 with one or more of these items, the compensation value may be initialized to the sum weight of the support plate 302, 502, bed 24, and these items. According to one embodiment of the present disclosure, the weight of each placed item may be manually provided by a caretaker or other operator through an external device or user interface 40. Alternatively, the scale manager may use the image sensor 48 to capture an image of the patient 1 and bed 24. Further, the scale manager may use a machine learning model trained to identify objects that may be placed on the bed 24 or patient 1. Additionally, in such embodiments the scale manager may determine the weight of identified objects by a predetermined mapping of such objects to weights.

Further, the scale manager may perform operations 906 through 918 for each period of weight measurement. As stated previously, the scale manager may measure the patient's weight at predetermined periods, e.g., every second, every minute, every 30 minutes, every hour, every two hours, and the like. Accordingly, the scale manager may perform operations 906 through 918 at each of these periods.

At operation 908, the scale manager may take a weight measurement. Taking a weight measurement may involve measuring the signals provided by the load cells 306, 506. The measure of the signals may correlate to a numeric representation of the weight in grams, kilograms, ounces, pounds, and the like.

At operation 910, the scale manager may determine if the difference between the two prior measurements is greater than a predetermined threshold. The predetermined threshold may represent a magnitude of weight change that is beyond an expected weight change of a neonate over the predetermined period. Accordingly, a weight change greater than the predetermined threshold may indicate an object has been placed on (or removed from) the patient 1 or bed 24. Thus, if the weight change exceeds the predetermined threshold, the control of the method 900 may flow to operation 912. If not, the control may flow to operation 916.

At operation 912, the scale manager may validate the difference in the measured weights of two prior periods. Validating the difference between these measured weights may involve determining if an object has been placed on, or removed from, the patient 1 or bed 24 that represents the weight change between the two prior readings. For example, the scale manager may prompt the caretaker or other operator via the user interface 40 or external device for a response indicting that the weight change is due to an object placement (or removal). Alternatively, the scale manager may provide an image captured by the image sensor 48, to a machine learning model to determine if an object has been placed on (or removed from) the patient 1 or bed 24. If this model identifies such an object, the scale manager may determine the weight of the object based on a mapping of such objects to object weights. If the weight change approximates the weight mapping, the scale manager may validate the weight change. In these ways, the scale manager may validate weight changes that exceed the predetermined threshold.

According to one embodiment of the present disclosure, the scale manager may not validate weight changes. For example, if the change in weight exceeds the predetermined value or deviates from the trend, the scale manager may disregard the change. However, in some scenarios, the scale manager may perform validation. For example, if the weight changes exceeds the predetermined threshold, and an operator indicates that there was no object placed (or removed), the scale manager may add an annotation that there was an unexplained change in weight at that point in measurement. Additionally, the scale manager may provide a prompt for a caretaker or other operator to do a full weighing sequence (e.g., lifting the baby) as the measured weight may no longer be accurate. The scale may also provide a prompt to perform a full calibration based on whether or not the full weighing resolves the discrepancy

At operation 914, the scale manager may modify the compensation value based on the difference (e.g., the weight change value). Thus, if the weight increases, the scale manager may add the difference to the compensation value. Conversely, if the weight decreases, the scale manager may subtract the difference from the compensation value. In this way, the scale manager may enable the determination of a more accurate weight of the patient 1, by tracking the compensation value.

At operation 916, the scale manager may determine the actual patient weight by adding the drift correction to, and subtracting the compensation value from, the weight measurement determined at operation 908. As stated previously, the drift correction may represent the amount of drift in the load cells. Further, the compensation value may represent the weight of objects placed on the patient 1 or bed. As such, by adding the drift correction to, and subtracting the compensation value from, the measured weight, the scale manager may determine the actual patient weight.

At operation 918, the scale manager may provide the actual weight. In one embodiment of the present disclosure, the scale manager may provide the actual weight for display on the user interface 40. Alternatively, the scale 38 may include a display, on which the scale manager may display the actual weight. Further, the scale manager may provide the actual weight to a data feed that records the actual weight at each period of measurement. The scale manager may use such a feed to identify weight changes that exceed the predetermined threshold described above. The control of the method 900 may subsequently flow to operation 906.

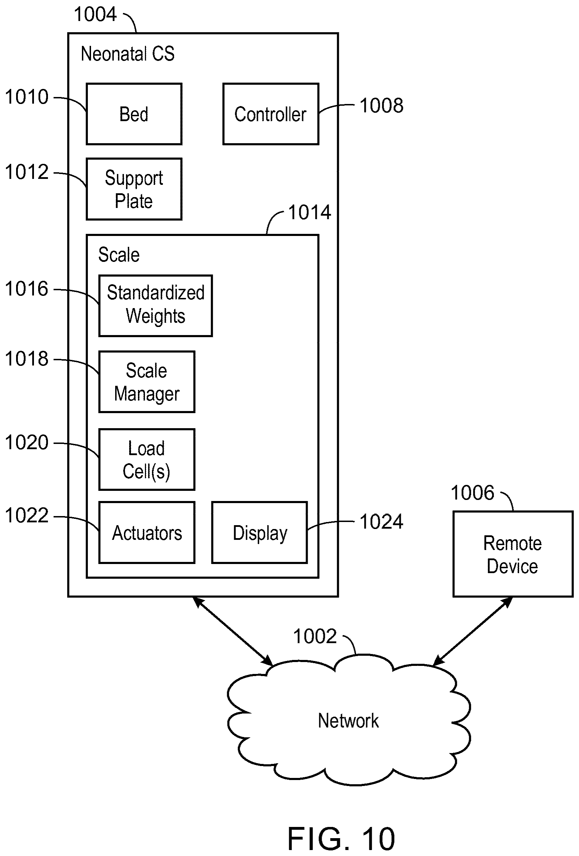

Fig. 10 is a diagram of a system 1000 for weight measurement in a neonatal care system with integrated weighing according to one embodiment of the present disclosure. The system 1000 includes a network 1002, neonatal care system (CS) 1004, and a remote device 1006. The network 1002 may be a computer communication network or collection of networks, such as a local area network, wide area network, and the like. In some embodiments of the present disclosure, the network 1002 is the Internet. Accordingly, the neonatal care system 1004 and remote device 1006 may communicate over the network 1002. The neonatal care system 1004 may be similar to the neonatal care system 10 described with respect to Figs. 1 and 2. Additionally, the remote device 1006 may be similar to the external device described with respect to Figs. 1 and 2.

The neonatal care system 1004 includes a controller 1008, bed 1010, support plate 1012, and scale 1014. The controller 1008 may be similar to the controller 70 described with respect to Figs. 1 and 2. Additionally, the bed 101, support plate 1012, and scale 1014 may be similar to the bed 24, support plate 302, 502, and scale 38 described with respect to Figs. 1, 2, 3A, 3B, 4, 5A, 5B, 5C, and 6-9.

Further, the scale 1014 includes standardized weights 1016, scale manager 1018, load cells 1020, actuators 1022, and a display 1024. The standardized weights 1016, scale manager 1018, load cells 1020, actuators 1022, and display 1024 may be respectively similar the weight elements 304, 504, scale manager, load cells 306, 506, actuators 308, 508, and user interface 40 described with respect to Figs. 1, 2, 3A, 3B, 4, 5A, 5B, 5C, and 6-9.

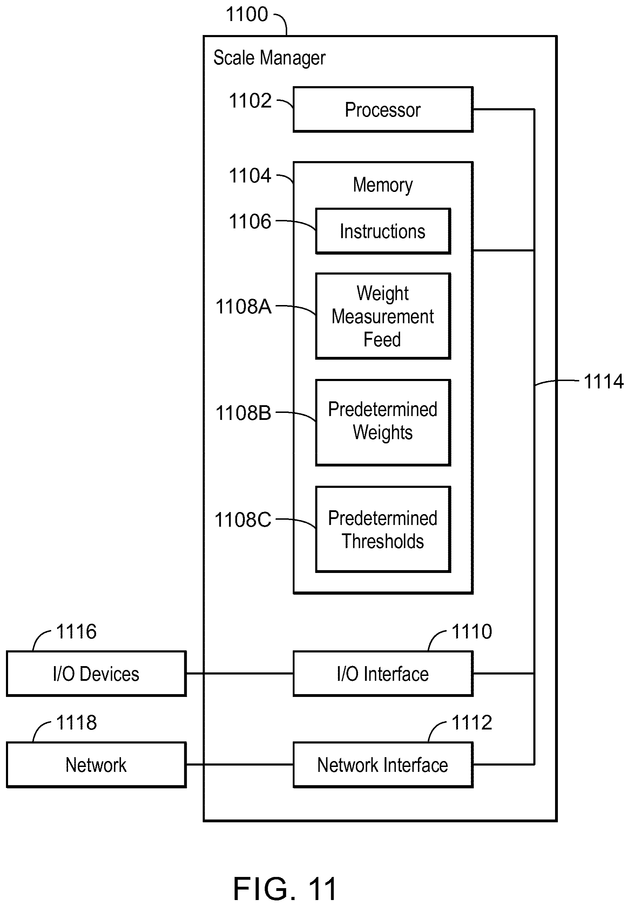

Fig. 11 is an exemplary scale manager 1100 for a neonatal care system with integrated weighing according to one embodiment of the present disclosure. The example scale manager 1100 may perform integrated weighing as described with respect to Figs. 1, 2, 3A, 3B, 4, 5A, 5B, 5C, and 6-9. In this example, the scale manager 1100 includes a processor 1102, memory 1104, input-output (I/O) interface 1110, and network interface 1112, which may be connected by an interconnect 1114. The processor 1102 may be a computer processing circuit (e.g., a central processing unit (CPU)) that retrieves and executes programming instructions 1106 stored in the memory 1104 to perform the functionality described herein. The interconnect 1114 may move data, such as programming instructions, between the processor 1102, memory 1104, I/O interface 1110, and network interface 1112. The interconnect 1114 may include one or more buses.

The memory 1104 may be a computer memory or storage device, including volatile memory, such as a random access memory (RAM) device (e.g., static RAM, dynamic RAM, and the like), non-volatile memory, such as a hard disk drive, solid state device (SSD), removable memory cards, optical storage, flash memory devices, and the like. In some examples, the memory 1104 may include volatile and non-volatile memory devices. Further, the memory 1104 may store instructions 1106, a weight measurement feed 1108A, predetermined weight s 1108B, and predetermined thresholds 1108C. The weight measurement feed 1108 may include a sequence of the weight measurements captured as described with respect to Fig. 9. Additionally, the predetermined weights 1108B may represent the weights of the weight elements 304, 504, described with respect to Figs. 3A, 3B, 5A, 5B, 5C, and 6-9. Further, the predetermined thresholds 1108C may represent the predetermined weight change thresholds and load cell drift thresholds described with respect to Figs. 3A, 3B, 5A, 5B, 5C, and 6-9.

Additionally, the scale manager 1100 may be in electronic communication with I/O devices 1116 through the I/O interface 1110, and with a network 1118 through the network interface 1112. The I/O devices 1116 may capture inputs and provide outputs as described herein. More specifically, the image sensor 48 described with respect to Figs. 1 and 2 may be input devices. Additionally, the display 42, speaker 44, and lights 46 described with respect to Figs. 1-3, and the display 1024, described with respect to Fig. 10, may be the output devices. The network 1118 may be an electronic communication network, such as a local area network, wide area network, and the like, for processing communications between the scale manager 1100 and the machine learning models and AI software products described herein. In some examples, the network 1118 may be wired, wireless (e.g., wi-fi, Bluetooth, or cellular), or some other computer communication network.

In some embodiments, the scale manager 1100 may be a server computer or similar device without a user interface but which receives requests from other computer systems having one or more user interfaces. Further, in some embodiments, the scale manager 1100 may be a portable computer, laptop, tablet computer, pocket computer, telephone, smart phone, or the like.

As used herein, the term, mechanism, can encompass hardware, software, firmware, or any suitable combination thereof. In some embodiments, any suitable computer readable media can be used for storing instructions for performing functions and/or processes described herein. For example, in some embodiments, computer readable media can be transitory or non-transitory. For example, non-transitory computer readable media can include media such as magnetic media (such as hard disks, floppy disks, etc.), optical media (such as compact discs, digital video discs, Blu-ray discs, etc.), semiconductor media (such as RAM, Flash memory, electrically programmable read only memory (EPROM), electrically erasable programmable read only memory (EEPROM), etc.), any suitable media that is not fleeting or devoid of any semblance of permanence during transmission, and/or any suitable tangible media. As another example, transitory computer readable media can include signals on networks, in wires, conductors, optical fibers, circuits, or any suitable media that is fleeting and devoid of any semblance of permanence during transmission, and/or any suitable intangible media.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A neonatal care system, comprising:
a scale comprising a plurality of load cells for measuring weight;
a plurality of weight elements having a plurality of predetermined weights, wherein each of load cells supports one or more of the predetermined weights;
a plurality of actuators configured to raise a platform supporting an infant off of the scale, wherein the plurality of actuators are further configured to lower the platform supporting the infant onto the scale;
a processing device; and
a memory storage device comprising instructions executable by the processing device to:
direct the actuators to raise the platform supporting the infant off of the scale;
determine a first plurality of measured weights based on a corresponding plurality of signals from the plurality of load cells; and
determine a drift of each of the load cells by determining a difference between each of the predetermined weights and each of the first plurality of measured weights.

2. The system of claim 1, wherein the instructions are executable by the processing device to:
determine that the drift exceeds a predetermined drift threshold; and
provide a first notification comprising a request to calibrate a load cell corresponding to the drift.

3. The system of claim 1, wherein the instructions are executable by the processing device to:
determine that the load cells are scheduled for a calibration;
determine that the drift does not exceed a predetermined drift threshold; and
provide a second notification comprising a suggestion to delay the calibration.

4. The system of claim 1, wherein the instructions are executable by the processing device to:
direct the actuators to lower the platform supporting the infant onto the scale;
determine a second plurality of measured weights based on a plurality of additional signals from the plurality of load cells; and
determine a weight of the infant based on the second plurality of measured weights, the predetermined weight, and the drift.

5. The system of claim 4, wherein the instructions are executable by the processing device to determine the weight of the infant at predetermined periodic intervals.

6. The system of claim 5, wherein the instructions are executable by the processing device to:
determine that a difference between a first interval weight of the infant determined at a first interval and a second interval weight of the infant determined at a second interval exceeds a predetermined threshold; and
determine whether the difference is representative of a weight change of the infant.

7. The system of claim 6, wherein the difference is determined not representative by:
capturing an image of the platform supporting the infant; and
identifying an object in the image that is representative of the difference.

8. The system of claim 6, wherein the difference is determined not representative by:
capturing an image of the platform supporting the infant; and
identifying a missing object from the image that is representative of the difference.

9. The system of claim 6, wherein the difference is determined not representative by:
providing a notification for a caregiver using a user interface, wherein the notification indicates the difference;
receiving an indication from the user interface that the difference is not a result of an object placement or removal and
providing a notification via the user interface to:
perform a full weighing cycle;or
re-calibrate the scale.

10. The system of claim 6, wherein the difference is determined representative by:
providing a notification for a caregiver using a user interface, wherein the notification indicates the difference; and
receiving an indication from the user interface that the difference is a result of an object placement or removal.

11. A method of non-disruptive load cell drift measurement, the method comprising:
directing a plurality of actuators of a scale to raise a platform supporting an infant off of the scale;
determining a first measured weight based on one or more signals from at least one load cell of the scale, wherein the at least one load cell supports all weight of a weight element having a predetermined weight; and
determining a drift of the at least one load cell by subtracting the predetermined weight from the first measured weight.

12. The method of claim 11, comprising:
determining that the drift exceeds a predetermined drift threshold; and
providing a first notification comprising a request to calibrate the at least one load cell.

13. The method of claim 11, comprising:
directing the actuators to lower the platform supporting the infant onto the scale;
determining a second measured weight based on one or more additional signals from the at least one load cell; and
determining a weight of the infant based on the second measured weight, the predetermined weight, and the drift.

14. The method of claim 13, comprising:
determining the weight of the infant at predetermined periodic intervals;
determining that a difference between a first interval weight of the infant determined at a first interval and a second interval weight of the infant determined at a second interval exceeds a predetermined threshold; and
determining whether the difference is representative of a weight change of the infant.
